# EUROPÄISCHE PATENTSCHRIFT

(11) **EP 4 335 716 B1**
(45) Veröffentlichungstag und Bekanntmachung des Hinweises auf die Patenterteilung: **03.06.2026**
(21) Anmeldenummer: 23194239.2
(22) Anmeldetag: 30.08.2023
(51) Int. Cl.: B61C 3/02, B61C 17/06, B61F 3/12, B61G 5/10, B60L 50/75, B60L 58/18

(54) **SCHIENENFAHRZEUG**
RAILWAY VEHICLE
VÉHICULE FERROVIAIRE

(30) Priorität: 09.09.2022 DE 102022209456
(43) Veröffentlichungstag der Anmeldung: 13.03.2024
(73) Patentinhaber: Siemens Mobility GmbH, 80997 München (DE)
(72) Erfinder: Jochmann, Thomas, 47807 Krefeld (DE); Zedník, Jirí, 14000 Praha (CZ)
(74) Vertreter: Siemens Patent Attorneys

(56) Entgegenhaltungen:
- EP-A1- 1 514 759
- EP-A1- 3 078 561
- EP-A1- 3 626 509
- US-A- 2 111 676

## Beschreibung

Die Erfindung betrifft ein Schienenfahrzeug, insbesondere ein Schienenfahrzeug für den Regional- und Fernverkehr.

Schienenfahrzeuge für den Regional- und Fernverkehr werden zunehmend mit Antriebs- bzw. Traktionsbatterien sowie gegebenenfalls ergänzend Brennstoffzellensystemen zur Versorgung insbesondere eines Antriebssystems des Schienenfahrzeugs ausgerüstet. Dies ermöglicht einen Betrieb der Schienenfahrzeugen auch in nicht elektrifizierten Abschnitten eines Streckennetzes und damit einen Ersatz bislang eingesetzter Schienenfahrzeuge mit Verbrennungskraftmaschinen.

Die im Vergleich zu ausschließlich in vollständig elektrifizierten Streckenabschnitten betriebenen Schienenfahrzeugen zusätzlich erforderlichen Komponenten für die Speicherung und gegebenenfalls ergänzend Generierung elektrischer Energie weisen große Volumina auf, welche ergänzend über die Wagen des Schienenfahrzeugs verteilt angeordnet werden müssen. Eine Anordnung dieser Komponenten in den Fahrgasträumen der Wagen soll dabei jedoch vermieden werden. Vielmehr wird angestrebt, alle Komponenten im Unterflurbereich der Wagen zwischen den Drehgestellen sowie im Dachbereich der Wagen anzuordnen.

Insbesondere die Antriebsbatterien werden aufgrund ihres jeweils großen Volumens und Gewichts auf mehrere Wagen verteilt angeordnet. Für einen Austausch von Energie werden die Antriebsbatterien über zwischen den Wagen geführte elektrische Leitungen miteinander verbunden, wobei diese Verbindung beispielsweise über steuerbare Schalter aufgetrennt werden kann. Aufgrund der Gleichspannung von typischerweise größer 1kV der Antriebsbatterien werden diese Leitungen nachfolgend als Hochspannungsleitungen bezeichnet.

Aus der internationalen Veröffentlichungsschrift WO 2018/103901 A1 ist eine Anordnung für einen Übergang von Leitungen zwischen Wagen eines Fahrzeugs, insbesondere eines Schienenfahrzeugs, bekannt, bei welcher Leitungsmodule verschiedener Versorgungsarten entlang einer benachbarte Wagen mechanisch koppelnden Kupplungsstange geführt werden, wobei eines der Leitungsmodule einer Übertragung elektrischer Energie dient. Aus der internationalen Veröffentlichungsschrift WO 2017/133993 A1 ist ferner ein Fahrzeug, insbesondere ein Schienenfahrzeug, bekannt, bei welchem eine flexible Hochspannungsleitung mittels einer Kabelführungseinrichtung im Bereich eines Spaltes zwischen verkoppelten Wagenkästen geführt wird, wobei die Kabelführungseinrichtung eine Vielzahl mechanisch miteinander gekoppelter Führungselemente aufweist.

Die Offenlegungsschrift DE 10 2018 106 961 A1 offenbart ein modulares System zur Bildung eines Schienenfahrzeugs, wobei zumindest ein Einzelstockwagenkasten und zumindest ein Doppelstockwagenkasten jeweils an wenigstens einem Ende einen Anschlussbereich aufweisen, der insbesondere einen Energieübertragungsanschluss umfasst. Die Europäische Patentanmeldung EP 3 626 509 A1 offenbart ein Schienenfahrzeug mit zumindest einem ersten und einem zweiten Endwagen, wobei ein in dem ersten Endwagen angeordneter Netzstromrichter einen ersten Traktionsstromrichter in dem ersten Endwagen über einen ersten Gleichspannungszwischenkreis speist und einen zweiten Traktionsstromrichter in dem zweiten Endwagen über einen zweiten Gleichspannungszwischenkreis speist.

Die Europäische Patentanmeldung EP 3 078 561 A1 offenbart ein Schienenfahrzeug mit einer modularen Anordnung von Speicherbehältern für ein Brenngas. Die Europäische Patentanmeldung EP 1 514 759 A1 offenbart ferner ein Drehgestell zwischen zwei Wagen eines Schienenfahrzeugs, an welchem ein Verbindungskabel oder ein Verbindungsrohr angeordnet ist.

Aufgabe der Erfindung ist es, ein Schienenfahrzeug anzugeben, welches eine optimale Nutzung der Dachbereiche von Wagen für die Anordnung von Komponenten insbesondere des Antriebssystems des Schienenfahrzeugs ermöglicht. Diese Aufgabe wird durch das Schienenfahrzeug mit den Merkmalen des unabhängigen Patentanspruchs gelöst.

Das erfindungsgemäße Schienenfahrzeug umfasst zumindest zwei Wagen, wobei Wagenenden benachbarter Wagen auf einem gemeinsamen Jakobs-Drehgestell abgestützt sind, und ein elektrisches Antriebssystem, wobei das Antriebssystem zumindest zwei Antriebsbatterien aufweist, welche an unterschiedlichen Wagen angeordnet sind, und wobei die Antriebsbatterien über zumindest eine Hochspannungsleitung verbunden sind. Gekennzeichnet ist das Schienenfahrzeug dadurch, dass ein Abschnitt der zumindest einen Hochspannungsleitung über das Jakobs-Drehgestell geführt ist.

Durch die Führung der die über mehrere Wagen verteilt angeordneten Antriebsbatterien verbindenden einen oder mehreren Hochspannungsleitung ist vorteilhaft weniger Raum für die Führung dieser elektrischen Leitungen im jeweiligen Dachbereich der Wagen vorgesehen werden, sodass in den Dachbereichen mehr Raum für die Anordnung von Komponenten des Antriebssystems zur Verfügung steht.

Jakobs-Drehgestelle werden vielfach in Triebzügen für den Regional- und Fernverkehr eingesetzt. Sie besitzen den Vorteil, dass sich benachbarte Wagen bzw. deren Wagenkästen auf einem gemeinsamen Drehgestell abstützen können, sodass nicht für jeden Wagen ein gesondertes Drehgestell vorzusehen ist und die Summe Drehgestelle des Triebzugs verringert werden kann. Gleichzeitig ermöglicht das Jakobs-Drehgestell relative Bewegungen der Wagen zueinander, wie sie beispielsweise bei Kurvenfahrten auftreten.

Das erfindungsgemäße Schienenfahrzeug umfasst beispielsweise zwei Wagen, wobei beide Wagen als Endwagen mit einem jeweiligen Führerstand ausgestaltet sind. Im Bereich des einen Wagenendes, an welchem der Führerstand angeordnet ist, stützen sich die Wagen beispielsweise auf einem jeweiligen Drehgestell ab, während sie sich im Bereich des anderen Wagenendes, an welchem ein Wagenübergang vorgesehen ist, über welchen sich Fahrgäste zwischen den Fahrgasträume der beiden Wagen bewegen können, auf einem gemeinsamen Jakobs-Drehgestell abstützen. Sofern das Schienenfahrzeug ergänzend zu den beiden Endwagen ein oder mehrere Mittelwagen umfasst, stützen deren beide Wagenenden jeweils auf einem Jakobs-Drehgestell ab.

Das Jakobs-Drehgestell kann grundsätzlich sowohl als ein Laufdrehgestell, dessen üblicherweise zwei Radsätze nicht angetrieben sind, oder als ein Triebdrehgestell mit zumindest einem angetriebenen Radsatz ausgestaltet sein. In gleicher Weise können die weiteren Drehgestelle als Laufdrehgestelle oder als Triebdrehgestelle ausgestaltet sein. Ein Radsatz umfasst dabei üblicherweise eine starre Radsatzwelle mit zwei daran drehfest angeordneten Rädern, die sich auf Schienen abstützen.

Das elektrische Antriebssystem des Schienenfahrzeugs umfasst neben den Antriebsbatterien in bekannter Weise zumindest eine Anzahl Antriebsstromrichter bzw. Traktionsstromrichter sowie eine Mehrzahl Fahrmotoren bzw. Traktionsmotoren, die in Triebdrehgestellen über ein jeweiliges Getriebe oder direkt einen jeweiligen Radsatz antreiben. Sofern das Schienenfahrzeug mit einem elektrischen Versorgungsnetz, beispielsweise einer entlang eines Streckenabschnitts angeordneten Oberleitung, verbindbar sein soll, umfasst das Antriebssystem ergänzend zumindest einen Stromabnehmer sowie, abhängig von der Versorgungsspannung, gegebenenfalls ergänzend einen Transformator sowie einen Netzstromrichter.

Gemäß einer Weiterbildung des Schienenfahrzeugs sind die Antriebsbatterien jeweils in einem Unterflurbereich eines der Wagen angeordnet.

Durch die Anordnung der Antriebsbatterien im Unterflurbereich der Wagen kann die diese verbindende zumindest eine Hochvoltleitung vorteilhaft eine relativ kurze Länge aufweisen.

Erfindungsgemäß weist das Antriebssystem ferner zumindest zwei an unterschiedlichen Wagen angeordnete Brennstoffzellensysteme auf, wobei jedes Brennstoffzellensystem zumindest einen Brennstoffzellenstapel und zumindest einen Brennstofftank aufweist, und wobei jedes der Brennstoffzellensysteme zumindest eine der Antriebsbatterien mit elektrischer Energie speist.

Erfindungsgemäß sind die Brennstoffzellensysteme jeweils in einem Dachbereich eines der Wagen angeordnet.

Die Brennstofftanks sowie Container, in denen der bzw. die Brennstoffzellenstapel sowie deren elektrische Hilfsbetriebe einschließlich beispielsweise Kühleinrichtungen angeordnet sind, werden vorzugsweise im Dachbereich der Wagen angeordnet, insbesondere damit austretender Brennstoff, beispielsweise Wasserstoff, keine potenzielle Gefahr für Fahrgäste darstellen kann. Aufgrund der erfindungsgemäßen Führung der zumindest einen Hochvoltleitung über das Jakobs-Drehgestell wird vorteilhaft mehr Raum im Dachbereich zur Anordnung dieser Komponenten der Brennstoffzellensysteme zur Verfügung gestellt.

Gemäß einer weiteren Weiterbildung des Schienenfahrzeugs ist der Abschnitt der zumindest einen Hochspannungsleitung an einer jeweiligen Schnittstelle in einem jeweiligen Unterflurbereich der benachbarten Wagen abgeschlossen.

Der Abschnitt der zumindest einen Hochspannungsleitung ist an einer jeweiligen Schnittstelle im Unterflurbereich der Wagen terminiert, sodass dieser ausgehend von der Schnittstelle in dem einen Wagen über das Jakobs-Drehgestell zu der Schnittstelle in dem anderen Wagen geführt ist. Um relativen Bewegungen der Wagen ohne Beschädigung folgen zu können, wird der Abschnitt im jeweiligen Übergangsbereich von dem Drehgestellrahmen zu dem Wagen mit einer ergänzenden Länge versehen. Vorzugsweise wird der Abschnitt dabei mittig über die Übergänge geführt, beispielsweise indem durch eine Befestigung mittig bzw. weitgehend mittig an einem Querträger des Drehgestellrahmens sowie an dem Unterflur des Wagens, wobei die Befestigung beispielsweise mittels einer jeweiligen Blockschelle erfolgt.

Gemäß einer weiteren Weiterbildung des Schienenfahrzeugs ist der Abschnitt der zumindest einen Hochspannungsleitung ausschließlich in einem jeweiligen Übergangsbereich zwischen dem Wagen ergänzend gegen Umwelteinflüsse geschützt ist.

Ein solcher ergänzender Schutz beispielsweise gegen Feuchtigkeit kann beispielsweise mittels einer ergänzenden Ummantelung des jeweiligen Leitungsabschnitts erfolgen, welche an der jeweiligen Blockschelle an dem Drehgestellrahmen und dem Unterflur abgeschlossen ist. Ein entsprechender Schutz über die weitere Länge des Abschnitts, insbesondere der in dem Jakobs-Drehgestell geführten Länge, ist hingegen nicht vorgesehen, um eine weitgehend ungehinderte Wärmeabfuhr aus der Leitung zu ermöglichen.

Gemäß einer weiteren Weiterbildung ist der Abschnitt der zumindest einen Hochspannungsleitung in dem Jakobs-Drehgestell zumindest überwiegend entlang eines Längsträgers des Drehgestellrahmens des Jakobs-Drehgestells geführt.

Bei beispielsweise zwei Hochspannungsleitungen können diese vorzugsweise parallel bzw. weitgehend parallel entlang des einen Längsträgers der Drehgestellrahmens geführt werden, wobei alternativ beide auch an unterschiedlichen Längsträgern des Drehgestellrahmens geführt werden können.

Gemäß einer auf der vorstehenden Weiterbildung basierenden weiteren Weiterbildung des Schienenfahrzeugs ist der Abschnitt der zumindest einen Hochspannungsleitung zumindest teilweise gegenüber in dem Jakobs-Drehgestell geführten Niederspannungsleitungen und/oder angeordneten Niedervoltkomponenten elektromagnetisch geschirmt ist.

Eine solche Schirmung gegenüber elektromagnetischer Strahlen, wie sie von Hochvoltleitungen ausgehen, kann beispielsweise mittels einer geerdeten Struktur aus einem elektrisch leitendem Material, insbesondere einem Metall, verwirklicht werden. Eine solche Struktur kann dabei ergänzend ausgestaltet sein, die Hochvoltleitungen entlang des Drehgestellrahmens zu führen. Zu schützende Niedervoltkomponenten sind beispielsweise Drehzahlsensoren und Beschleunigungssensoren.

Gemäß einer auf den beiden vorstehenden Weiterbildungen basierenden weiteren Weiterbildung des Schienenfahrzeugs ist der Drehgestellrahmen des Jakobs-Drehgestells innenliegend ausgestaltet, wobei die Längsträger zwischen den Rädern eines jeweiligen Radsatzes angeordnet sind.

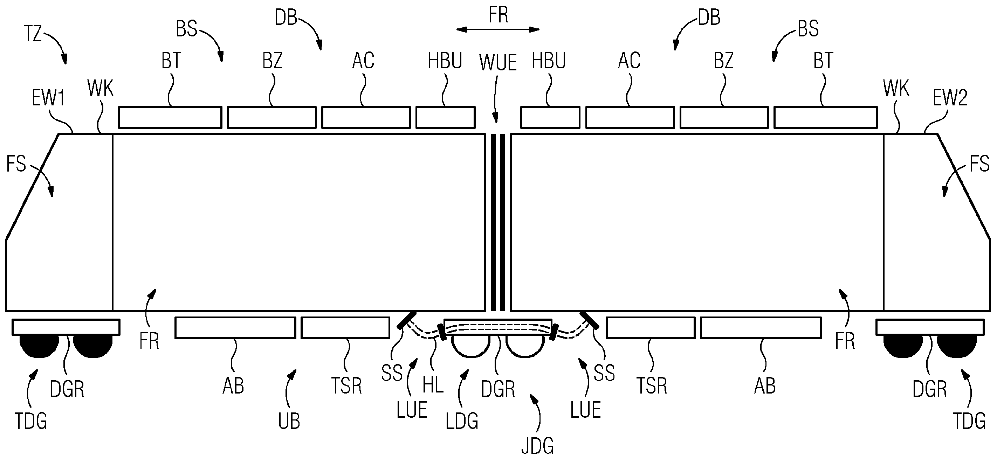

Das erfindungsgemäße Schienenfahrzeug wird nachfolgend anhand eines Ausführungsbeispiels beschrieben. Dabei zeigt
- Fig 1: schematisch ein Schienenfahrzeug mit zwei Wagen.

Die FIG 1 zeigt schematisch eine Seitenansicht eines als ein Triebzug TZ ausgestalteten Schienenfahrzeugs. Der Triebzug TZ umfasst zwei Wagen, die jeweils als ein Endwagen EW1, EW2 mit einem Führerstand FS sowie einem Fahrgastraum FGR ausgestaltet sind. An den einander zugewandten Stirnseiten sind die Fahrgasträume FGR der beiden Wagen EW1, EW2 über einen Wagenübergang WUE miteinander verbunden. Die Wagen EW1, EW2 bzw. deren Wagenkästen WK stützen sich auf gesamt drei Drehgestellen ab, wobei im Bereich des Führerstands FS jeweils ein Triebdrehgestell TDG mit zwei angetriebenen Radsätzen angeordnet ist. Im Bereich des Wagenübergangs WUE stützen sich die Wagen EW1, EW2 hingegen auf einem gemeinsamen Jakobs-Drehgestell JDG ab, welches als ein Laufdrehgestell LDG ohne angetriebene Radsätze ausgestaltet ist. Die drei Drehgestelle stützen sich wiederum auf nicht dargestellten Schienen ab, auf denen das Schienenfahrzeug in den Fahrtrichtungen FR fahrbar ist.

Die Wagen EW1, EW2 weisen jeweils eine Antriebseinrichtung auf, deren hauptsächliche Komponenten im Dachbereich DB sowie im Unterflurbereich UB des jeweiligen Wagenkastens WK angeordnet sind. Beispielhaft sind die Wagen dabei symmetrisch aufgebaut, die Komponenten entsprechend an den gleichen Orten an den Wagenkästen WK angeordnet.

Zum einen weist die jeweilige Antriebseinrichtung einen Traktionsstromrichter TSR auf, welcher im Unterflurbereich UB des Wagenkastens WK angeordnet ist. Dieser wird von einer ebenfalls im Unterflurbereich UB angeordneten Antriebsbatterie AB mit elektrischer Energie gespeist und versorgt beispielsweise in dem Triebdrehgestell TDG des Wagens EW1, EW2 angeordnete Fahrmotoren, welche direkt oder über ein Getriebe die Radsätze antreiben.

Die Antriebsbatterien AB werden von einem jeweiligen Brennstoffzellensystem BS mit elektrischer Energie gespeist. Das jeweilige Brennstoffzellensystem BS umfasst beispielhaft einen Brennstofftank BT, in welchem gasförmiger oder flüssiger Wasserstoff speicherbar ist, sowie zumindest eine Brennstoffzelle BZ. Die Brennstoffzelle BZ dient dazu, mittels zugeführtem Brennstoff und einem Reaktionsgas, beispielsweise Sauerstoff aus dem Umgebungsluft, elektrische Energie zu erzeugen. Neben einem Brennstoffzellenstapel, in welchem die elektrochemischen Prozesse ablaufen, weist die Brennstoffzelle BZ Hilfsbetriebe wie insbesondere einen Kompressor, eine Kühlanlage und einen Gleichspannungssteller für eine Spannungsanpassung an die auf. Diese der Brennstoffzelle BZ zugeordneten Komponenten sind beispielhaft in einem gemeinsamen Container angeordnet. Sowohl dieser Container als auch der Brennstofftank BT sind im Dachbereich DB des Wagens EW1, EW2 angeordnet.

Neben dem Brennstoffzellensystem BS sind im jeweiligen Dachbereich DB der Wagen EW1, EW2 beispielhaft weitere elektrische Komponenten wie insbesondere eine Klimatisierungseinrichtung AC zur Klimatisierung des Fahrgastraums FGR sowie ein Hilfsbetriebeumrichter HBU zur Versorgung weiterer Hilfsbetriebe für den Betrieb des Triebzugs TZ angeordnet.

Die Antriebsbatterien AB im Unterflurbereich UB des jeweiligen Wagens EW1, EW2 sind beispielhaft über zwei elektrische Leitungen bzw. Hochspannungsleitungen HL elektrisch miteinander verbunden. Diese Verbindung kann beispielsweise über nicht dargestellte Schalter geschlossen und getrennt werden. Ein schematisch dargestellter Abschnitt der beiden Hochspannungsleitungen HL ist jeweils an einer Schnittstelle SS im Unterflurbereich UB des jeweiligen Wagenkastens WK, beispielsweise einer jeweiligen elektrischen Steckverbindung, abgeschlossen. Ausgehend von diesen Schnittstellen SS werden die Hochspannungsleitungen HL über einen Leitungsübergang LUE und durch das Jakobs-Drehgestell JDG geführt. Dabei weist der Abschnitt in dem jeweiligen Bereich des Leitungsübergangs LUE einen ausreichende Länge auf, um Bewegungen des Jakobs-Drehgestells JDG relativ zu dem Wagenkasten WK beschädigungsfrei folgen zu können. Vorzugsweise erfolgt die Führung der Hochspannungsleitungen HL dabei, in Querrichtung des Wagenkastens WK bzw. Jakobs-Drehgestells JDG betrachtet, mittig. Eine entsprechende mittige Befestigung der Hochspannungsleitungen HL an dem Wagenkasten WK sowie beispielsweise an einem Querträger des Drehgestellrahmens DGR kann dabei mittels Blockschellen erfolgen. Vorzugsweise sind die Hochspannungskabel HL im Bereich der Leitungsübergangs LUE mit einer zusätzlichen Schutzummantelung versehen, um eine mögliche Beschädigung der Leitungen beispielsweise aufgrund von Schotterflugs oder Feuchtigkeit vorzubeugen.

In dem Drehgestellrahmen DGR des Jakobs-Drehgestells JDG werden die Hochspannungsleitungen HL über vorzugsweise eine hauptsächliche Länge entlang eines Längsträgers geführt, wobei wiederum Blockschellen für eine Befestigung an dem Längsträger verwendet werden können. Dies gewährt insbesondere einen Schutz der Hochspannungsleitungen HL vor mechanischen Beschädigungen, sodass in diesem Bereich keine ergänzende Ummantelung erforderlich ist. Sofern die Hochspannungsleitungen in der Nähe von Niederspannungskomponenten oder Niederspannungsleitungen in dem Drehgestellrahmen DGR geführt werden, kann zur Vermeidung einer elektromagnetischen Beeinflussung eine zusätzliche Schirmung vorgesehen werden. Eine solche Schirmung kann beispielsweise aus einem geerdetem Blech bestehen.

## Patentansprüche

1. Schienenfahrzeug (TZ), umfassend:
- zumindest zwei Wagen (EW1, EW2), wobei Wagenenden benachbarter Wagen (EW1, EW2) auf einem gemeinsamen Jakobs-Drehgestell (JDG) abgestützt sind, und
- ein elektrisches Antriebssystem, wobei das Antriebssystem zumindest zwei Antriebsbatterien (AB) aufweist, welche an unterschiedlichen Wagen (EW1, EW2) angeordnet sind, und wobei die Antriebsbatterien (AB) über zumindest eine Hochspannungsleitung (HL) verbunden sind,
**dadurch gekennzeichnet, dass**
- ein Abschnitt der zumindest einen Hochspannungsleitung (HL) über das Jakobs-Drehgestell (JDG) geführt ist,
- das Antriebssystem ferner zumindest zwei an unterschiedlichen Wagen (EW1, EW2) angeordnete Brennstoffzellensysteme (BS) aufweist, wobei jedes Brennstoffzellensystem (BS) zumindest einen Brennstoffzellenstapel (BZ) und zumindest einen Brennstofftank (BT) aufweist, und wobei jedes der Brennstoffzellensysteme (BS) zumindest eine der Antriebsbatterien (AB) mit elektrischer Energie speist, und
- die Brennstoffzellensysteme (BS) jeweils in einem Dachbereich (DB) eines der Wagen (EW1, EW2) angeordnet sind.

2. Schienenfahrzeug (TZ) nach Anspruch 1, **dadurch gekennzeichnet, dass**
die Antriebsbatterien (AB) jeweils in einem Unterflurbereich (UB) eines der Wagen (EW1, EW2) angeordnet sind.

3. Schienenfahrzeug (TZ) nach einem der vorstehenden Ansprüche, **dadurch gekennzeichnet, dass**
der Abschnitt der zumindest einen Hochspannungsleitung (HL) an einer jeweiligen Schnittstelle (SS) in einem jeweiligen Unterflurbereich (UB) der benachbarten Wagen (EW1, EW2) abgeschlossen ist.

4. Schienenfahrzeug (TZ) nach einem der vorstehenden Ansprüche, **dadurch gekennzeichnet, dass**
der Abschnitt der zumindest einen Hochspannungsleitung (HL) ausschließlich in einem jeweiligen Übergangsbereich (LUE) zwischen dem Wagen (EW1, EW2) ergänzend gegen Umwelteinflüsse geschützt ist.

5. Schienenfahrzeug (TZ) nach einem der vorstehenden Ansprüche, **dadurch gekennzeichnet, dass**
der Abschnitt der zumindest einen Hochspannungsleitung (HL) in dem Jakobs-Drehgestell (JDG) zumindest überwiegend entlang eines Längsträgers des Drehgestellrahmens (DGR) des Jakobs-Drehgestells (JDG) geführt ist.

6. Schienenfahrzeug (TZ) nach Anspruch 5, **dadurch gekennzeichnet, dass**
der Abschnitt der zumindest einen Hochspannungsleitung (HL) zumindest teilweise gegenüber in dem Jakobs-Drehgestell (JDG) geführten Niederspannungsleitungen und/oder angeordneten Niedervoltkomponenten elektromagnetisch geschirmt ist.

7. Schienenfahrzeug (TZ) nach Anspruch 5 oder 6, **dadurch gekennzeichnet, dass**
der Drehgestellrahmen (DGR) des Jakobs-Drehgestells (JDG) innenliegend ausgestaltet ist, wobei die Längsträger zwischen Rädern eines jeweiligen Radsatzes angeordnet sind.

## Claims

1. Rail vehicle (TZ), comprising:
- at least two cars (EW1, EW2), wherein car ends of adjacent cars (EW1, EW2) are supported on a common Jacobs bogie (JDG), and
- an electrical drive system, wherein the drive system has at least two drive batteries (AB), which are arranged on different cars (EW1, EW2), and wherein the drive batteries (AB) are connected via at least one high-voltage line (HL),
**characterised in that**
- a section of the at least one high-voltage line (HL) is guided via the Jacobs bogie (JDG),
- the drive system further has at least two fuel cell systems (BS) that are arranged on different cars (EW1, EW2), wherein each fuel cell system (BS) has at least one fuel cell stack (BZ) and at least one fuel cell tank (BT), and wherein each of the fuel cell systems (BS) feeds at least one of the drive batteries (AB) with electrical energy, and
- the fuel cell systems (BS) are in each case arranged in a roof region (DB) of one of the cars (EW1, EW2).

2. Rail vehicle (TZ) according to claim 1, **characterised in that**
the drive batteries (AB) are each arranged in an underfloor region (UB) of one of the cars (EW1, EW2).

3. Rail vehicle (TZ) according to one of the preceding claims,
**characterised in that**
the section of the at least one high-voltage line (HL) is terminated at a respective interface (SS) in a respective underfloor region (UB) of the adjacent cars (EW1, EW2).

4. Rail vehicle (TZ) according to one of the preceding claims,
**characterised in that**
the section of the at least one high-voltage line (HL) is exclusively protected from environmental influences on a supplementary basis in a respective transition region (LUE) between the cars (EW1, EW2).

5. Rail vehicle (TZ) according to one of the preceding claims,
**characterised in that**
the section of the at least one high-voltage line (HL) in the Jacobs bogie (JDG) is guided at least predominantly along a longitudinal support of the bogie frame (DGR) of the Jacobs bogie (JDG).

6. Rail vehicle (TZ) according to claim 5, **characterised in that**
the section of the at least one high-voltage line (HL) is at least partially electromagnetically shielded from low-voltage lines guided in the Jacobs bogie (JDG) and/or low-voltage components arranged therein.

7. Rail vehicle (TZ) according to claim 5 or 6, **characterised in that**
the bogie frame (DGR) of the Jacobs bogie (JDG) is embodied as lying on the inside, wherein the longitudinal supports are arranged between wheels of a respective wheelset.

## Revendications

1. Véhicule (TZ) ferroviaire, comprenant :
- au moins deux voitures (EW1, EW2), dans lequel des extrémités de voitures (EW1, EW2) voisines sont appuyées sur un bogie Jakobs (JDG) commun, et
- un système électrique d'entraînement, dans lequel le système d'entraînement a au moins deux batteries (AB) d'entraînement, qui sont disposées sur des voitures (EW1, EW2) différentes, et dans lequel les batteries (AB) d'entraînement sont connectées par au moins une ligne (HL) de haute tension,
**caractérisé en ce qu'**
- un tronçon de la au moins une ligne (HL) de haute tension passe par le bogie Jakobs (JDG),
- le système d'entraînement a, en outre, au moins deux systèmes (BS) de piles à combustible disposés sur des voitures (EW1, EW2) différentes, dans lequel chaque système (BS) de piles à combustible a au moins un empilement (BZ) de piles à combustible et au moins un réservoir (BT) de combustible, et dans lequel chacun des systèmes (BS) de piles à combustible alimente en énergie électrique au moins l'une des batteries (AB) d'entraînement, et
- les systèmes (BS) de piles à combustible sont disposés respectivement dans une partie (DB) de toit de l'une des voitures (EW1, EW2).

2. Véhicule (TZ) ferroviaire suivant la revendication 1,
**caractérisé en ce que**
les batteries (AB) d'entraînement sont disposées respectivement dans une partie (UB) sous caisse de l'une des voitures (EW1, EW2).

3. Véhicule (TZ) ferroviaire suivant l'une des revendications précédentes, **caractérisé en ce que**
le tronçon de la au moins une ligne (HL) de haute tension se termine à une interface (SS) respective dans une partie (UB) sous caisse respective des voitures (EW1, EW2) voisines.

4. Véhicule (TZ) ferroviaire suivant l'une des revendications précédentes, **caractérisé en ce que**
le tronçon de la au moins une ligne (HL) de haute tension est protégé de manière complémentaire contre les influences de l'environnement exclusivement dans une zone (LUE) de transition respective entre les voitures (EW1, EW2).

5. Véhicule (TZ) ferroviaire suivant l'une des revendications précédentes, **caractérisé en ce que**
le tronçon de la au moins une ligne (HL) de haute tension dans le bogie Jakobs (JDG) passe au moins d'une manière prépondérante le long d'un longeron du châssis (DGR) du bogie (JDG) Jakobs.

6. Véhicule (TZ) ferroviaire suivant la revendication 5,
**caractérisé en ce que**
le tronçon de la au moins une ligne (HL) de haute tension est protégé électromagnétiquement au moins en partie de lignes de basse tension passant dans le bogie (JDG) Jakobs et/ou de composants de basse tension, qui y sont montés.

7. Véhicule (TZ) ferroviaire suivant la revendication 5 ou 6,
**caractérisé en ce que**
le châssis (DGR) du bogie (JDG) Jakobs est conformé en se trouvant à l'intérieur, dans lequel les longerons sont disposés entre des roues d'un essieu respectif.
